# FASCICULE DE BREVET EUROPEEN

(11) **EP 3 027 307 B1**
(45) Date de publication et mention de la délivrance du brevet: **29.05.2019**
(21) Numéro de dépôt: 14750578.8
(22) Date de dépôt: 24.07.2014
(51) Int. Cl.: B01J 23/10, B01J 37/00, C01F 17/00, C01G 25/00, C04B 35/50

(54) **PROCÉDÉ DE TRAITEMENT PAR UN FAISCEAU D'IONS DE POUDRE A BASE D'OXYDE DE CERIUM**
VERFAHREN ZUR BEHANDLUNG EINES PULVERS AUS CEROXID MITTELS EINES IONENSTRAHLS
METHOD OF TREATING POWDER MADE FROM CERIUM OXIDE USING AN ION BEAM

(30) Priorité: 01.08.2013 FR 1301847
(43) Date de publication de la demande: 08.06.2016
(73) Titulaire: Ionics France, 14200 Hérouville-Saint-Clair (FR)
(72) Inventeur: BUSARDO, Denis, F-14510 Gonneville-sur-Mer (FR); GUERNALEC, Frédéric, F-35340 Liffre (FR)
(74) Mandataire: Cabinet Plasseraud
(86) Numéro de dépôt international: PCT/FR2014/051919
(87) Numéro de publication internationale: WO 2015/015098

(56) Documents cités:
- FR-A1- 2 941 878
- TAMAKI NAGANUMA ET AL: "Stability of the Ce3+ valence state in cerium oxide nanoparticle layers", NANOSCALE, vol. 4, no. 16, 26 juin 2012 (2012-06-26), page 4950, XP055115890, ISSN: 2040-3364, DOI: 10.1039/c2nr30406f
- TROVARELLI A ET AL: "The utilization of ceria in industrial catalysis", CATALYSIS TODAY, AMSTERDAM, NL, vol. 50, 1 janvier 1999 (1999-01-01), pages 353-367, XP002295319, DOI: 10.1016/S0920-5861(98)00515-X
- KASPAR J ET AL: "Use of CeO2-based oxides in the three-way catalysis", CATALYSIS TODAY, AMSTERDAM, NL, vol. 50, 1 janvier 1999 (1999-01-01), pages 285-298, XP002215076, DOI: 10.1016/S0920-5861(98)00510-0

## Description

L'invention a pour objet un procédé de traitement par un faisceau d'ions d'une poudre à base d'oxyde de cérium, notamment d'un promoteur à base d'oxyde de cérium dans le but d'augmenter la mobilité de l'oxygène à la surface et à l'intérieur du promoteur, de diminuer la température de réduction du promoteur et d'augmenter le rendement des réactions auxquelles le promoteur est associé, de réduire la quantité de catalyseur dont il favorise le pouvoir catalytique.

On rappelle, qu'en catalyse, un promoteur est un composé, se présentant généralement sous forme de poudre, qui augmente le pouvoir catalytique d'un catalyseur, sans avoir lui-même de pouvoir catalytique intrinsèque.

On entend par promoteur à base d'oxyde de cérium, un promoteur comprenant au moins un atome de cérium et d'oxygène. Cette famille de promoteurs est connue pour sa capacité de stockage et de libération de l'oxygène et est notamment mise en oeuvre dans les pots d'échappement automobile. Les promoteurs à base d'oxyde de cérium agissent comme un réservoir d'oxygène pour des réactions d'oxydoréduction impliquant le couple Ce4+/Ce3+. Ils permettent par exemple d'accroitre l'efficacité dépôt catalytique à trois voies en élargissant la fenêtre de réglage air-carburant.

Depuis plusieurs années, les problèmes liés à l'environnement prennent de plus en plus d'ampleur. Un des problèmes majeurs est la pollution atmosphérique causée par l'automobile. Afin de limiter la pollution automobile et notamment les émissions de monoxyde de carbone (CO), hydrocarbures (HC), et d'oxydes d'azote (NOx), les voitures ont été progressivement équipées d'un pot catalytique. Celui-ci a pour rôle de transformer les molécules polluantes nocives (CO, HC et NOx) en espèces non toxiques (CO2, N2 et H2O) : c'est la catalyse « trois voies ». Ces dernières années, les solutions solides cérine-zircone paraissent s'imposer dans les formulations des catalyseurs trois voies aux dépends de la cérine, car elles présentent une grande capacité de stockage d'oxygène et résistent davantage aux traitements à haute température. Cependant les conditions d'utilisation des pots catalytiques lors du démarrage à froid des moteurs rendent souhaitable, voire imposent, d'améliorer encore l'efficacité redox de ces oxydes à basse température. Des études récentes du système ternaire Ce-Sn-O indiquent que les oxydes Ce2Sn207-Ce2Sn208 de type pyrochlore présentent aussi des propriétés de stockage d'oxygène.

Il en résulte un besoin de méthode de traitement de poudres à base d'oxyde de cérium, notamment de promoteurs sous forme de poudre à base d'oxyde de cérium, présentant une efficacité redox améliorée à basse température, de préférence selon des méthodes facilement industrialisables, de manière à pouvoir offrir de telles poudres, notamment des promoteurs, en quantité significative et à des coûts raisonnables.

TAMAKI NAGANUMA ET AL: "Stability of the Ce3+ valence state in cerium oxide nanoparticle layers",NANOSCALE, vol. 4, no. 16, 26 juin 2012, page 4950-4953, divulgue un procédé de traitement de poudre à base d'oxyde de cérium par un plasma d'ion d'argon pour améliorer le pouvoir catalytique de ladite poudre.

L'invention a pour but d'offrir une méthode de production de promoteur d'oxyde de cérium sous forme de poudre peu onéreuse et permettant d'obtenir des quantités de poudres répondant aux besoins de nombreuses applications.

L'invention propose ainsi un procédé de traitement par un faisceau d'ions d'une poudre d'oxyde selon la revendication 1 où :
- la poudre est brassée une ou plusieurs fois durant le traitement;
- les ions du faisceau d'ions sont sélectionnés parmi les ions des éléments de la liste constituée de l'hélium (He), du bore (B), du carbone (C), de l'azote (N), de l'oxygène (O), du néon (Ne), de l'argon (Ar), du krypton (Kr), du xénon (Xe) ;
- la tension d'accélération des ions est supérieure ou égale à 10 kV et inférieure ou égale à 1000 kV ;
- la température de la poudre est inférieure ou égale à T_{f}/3, où T_{f} est la température de fusion de ladite poudre et est exprimée en Kelvin ;
- on choisit la dose totale d'ions cumulée à la fin du traitement par unité de masse de poudre à traiter dans une plage comprise entre 10¹⁶ ions/gramme de poudre et 10²² ions/gramme de poudre pour diminuer la température de réduction de la poudre à base d'oxyde de cérium.

Dans le cadre de la présente invention, on entend par « brasser » ou par « brassage » le fait de remuer une poudre de manière à en mêler les grains.

Selon un mode de réalisation, la dose totale d'ions cumulée à la fin du traitement par unité de masse de poudre à traiter dans une plage est comprise entre 10¹⁸ ions/gramme de poudre et 10²⁰ ions/gramme de poudre.

Selon un mode de réalisation, la poudre est disposée sous la forme d'une couche de poudre, et la couche de poudre est brassée une ou plusieurs fois selon un processus répétitif hors faisceau, qui peut consister par exemple avant chaque traitement, à regrouper la poudre en un point de l'aire de traitement puis à l'étaler à nouveau au moyen d'un pinceau fin, sur la même surface d'étalement. Cette poudre étalée présente une épaisseur moyenne sensiblement égale à son poids divisée par le produit de sa masse volumique et de sa surface d'étalement. Compte tenu du parcours limité des ions dans la poudre qui peut être inférieur à l'épaisseur d'étalement de la poudre, il peut être souhaitable de répéter un certain nombre de fois cette opération d'étalement pour permettre aux grains situés en couches profondes, hors d'atteinte du faisceau, d'avoir une probabilité suffisamment élevée d'être exposés au moins une fois au faisceau. Ce mode de brassage n'est pas limitatif, on pourrait par exemple choisir un autre mode de brassage continu sous faisceau, au moyen d'un dispositif vibrant (bol, plaque...) qui recueille, brasse et expose la poudre au faisceau durant tout le traitement.

Selon un mode de réalisation permettant de s'assurer d'un brassage optimal, le brassage de la poudre est répété un nombre minimum de fois pour avoir l'assurance qu'une quantité significative de grains de poudre pour obtenir un effet sur la diminution de la température de réduction, ont été statistiquement soumis au traitement. Les inventeurs ont pu valider expérimentalement que ce nombre minimum de fois répond à la règle suivante : le nombre minimum de fois est approximativement égale à l'épaisseur de la poudre étalée sur la surface divisée par le parcours des ions du faisceau dans la poudre, ce nombre doit être supérieur ou égal à 2 pour éviter des effets de bord négatif. Le parcours des ions peut être estimé par des logiciels développés et commercialisés afin de faciliter ou d'effectuer de tels calculs, comme par exemple les logiciels commercialisés sous les noms « SRIM » (« *The Stopping and Range of Ions in Matter* ») et « TRIM » (« *The Transport of Ions in Matter* »), développés notamment par James F. Ziegler.

Comme on a pu l'indiquer plus haut, selon un autre mode de réalisation, la poudre est brassée sous faisceau en la faisant vibrer durant le traitement (par exemple dans un bol ou une plaque vibrante) de manière à permettre aux grains de poudre situés dans les couches profondes d'avoir une probabilité significative, de remonter à la surface pour être exposée au moins une fois au faisceau durant le traitement. On peut considérer que la durée du traitement dépend de la dose totale en ions requise pour traiter une quantité de poudre donnée (exprimée en gramme), avec un faisceau d'intensité fixée. Il est souhaitable que le traitement soit suffisamment efficace pour permettre à une quantité significative de grains d'être traités pour obtenir l'effet recherché dans des conditions optimales. Pour de forte intensité, autrement dit pour un temps de traitement plutôt court, il est souhaitable de privilégier des moyens de brassage très efficace, donc couteux (par exemple moyens de brassage ultrasonique) pour permettre aux grains de poudre d'avoir une probabilité non négligeable d'être exposé au moins une fois sous le faisceau. A l'opposé, si le brassage de la poudre s'avère trop lent en raison de l'emploi de moyen moins couteux, on peut envisager de réduire l'intensité faisceau, donc d'augmenter le temps de traitement pour permettre aux grains de poudre d'avoir une plus grande probabilité d'être exposé au faisceau. Un mauvais brassage peut se traduire par une surexposition au faisceau de certain grains, ce qui peut être préjudiciable par surdosage à l'effet optimal recherché, au détriment d'autres grains qui eux peuvent restés vierges de tout traitement.

Les inventeurs ont pu établir les deux paramètres pertinents du faisceau d'ions permettant d'obtenir l'effet recherché par le procédé de l'invention: la tension d'accélération des ions et la dose de traitement (exprimée en nombres d'ions) relative à une quantité de poudre à traiter (exprimée en grammes) c'est-à-dire, la dose totale d'ions cumulée à la fin du traitement par unité de masse de poudre à traiter.

Le taux de traitement de la poudre peut être associé à l'efficacité du brassage mis en oeuvre par des moyens divers et variés, notamment selon des modes non limitatifs dont deux exemples ont été cités plus haut. Pour une dose de traitement (exprimé en nombre d'ions) associée à une quantité de poudre (exprimée en gramme), on nomme « taux de traitement d'une poudre » le rapport entre le nombre de grains de poudre, ayant été exposés au moins une fois au faisceau par rapport au nombre de grains total de poudre initiale. Par exemple pour un taux de 90%, on estime que 10% des grains n'ont pas été exposés au faisceau en raison de leur maintien durant tout le traitement, dans des couches profondes, hors d'atteinte des ions du faisceau. 90% de grains restants l'ont été au moins une fois voire plusieurs fois. Ce taux de traitement compris entre 0% (la poudre est vierge) et tendant vers 100% sans jamais l'atteindre (puisqu'il n'existe aucune certitude sur le plan statistique pour que ce le soit), constitue une grandeur caractéristique quantifiant l'efficacité de brassage de la poudre. Ce taux de traitement correspond à la probabilité pour qu'un grain de poudre soit traité une voire plusieurs fois.

Selon un mode de réalisation du procédé une poudre à base d'oxyde de cérium après traitement est constituée de grains traités ou non, chaque grain l'étant une ou plusieurs fois, partiellement ou totalement sur toute sa surface, dans une épaisseur n'excédant pas le parcours de l'ion, pour augmenter la mobilité de l'oxygène en surface et dans la masse, pour diminuer la température de réduction de ladite poudre.

Selon un mode de réalisation, pour une dose en ions fixée relative à une quantité de poudre donnée, le taux de traitement de la poudre requis est supérieur ou égal à 10%. Selon un mode de réalisation, le taux de traitement de la poudre requis est supérieur ou égal à 50% et n'excède pas 80%. On peut ainsi amplifier l'effet désiré avec des durées de traitement relativement acceptables.

De manière générale, mais non limitative, la poudre à base d'oxyde de cérium est constituée de grains de forme (que l'on peut approximer sous forme de sphère) et de taille différente. La distribution en taille peut être établie par granulométrie qui est l'étude de la distribution statistique des tailles d'une collection d'éléments finis de matière naturelle ou fractionnée. L'analyse granulométrique est l'ensemble des opérations permettant de déterminer la distribution des tailles des éléments composant la collection. La poudre à base d'oxyde de cérium est généralement constituée de grains dont la taille peut varier de 10 nm à 5 micromètres, avec une très forte proportion de grains d'une taille moyenne correspondant à une centaine de nanomètres, autrement dit d'une taille sensiblement comparable au parcours des ions du faisceau. On peut sans trop se tromper, estimer que les grains de poudre peuvent être traversés de part en part par les ions, laissant peu de surface de grains non traitée.

Les grains de poudres peuvent être denses ou poreux. Ils se présentent généralement sous forme de multiples canaux pour faciliter la circulation de l'oxygène.

Le choix des conditions de bombardement et des conditions de brassage selon l'invention permet d'obtenir avantageusement des poudres à base d'oxyde de cérium présentant une grande mobilité de l'oxygène à la surface et en profondeur, ainsi qu'une diminution de leur température de réduction.

Les inventeurs ont pu constater que les plages choisies selon l'invention, associées au type des ions du bombardement ionique, et portant sur la tension d'accélération (autrement dit l'énergie) et la dose d'ions par unité de masse de poudres à traiter permettent de sélectionner des conditions expérimentales où la production de poudres à base d'oxyde de cérium présentant des propriétés avantageuses. Afin d'optimiser les résultats, il peut être utile de considérer le taux de traitement des grains de poudre,

En outre, ils ont pu constater que le procédé peut être mis en oeuvre « à froid », notamment à température ambiante et qu'il convient que la température de la poudre à base d' de cérium demeure inférieure ou égale à la valeur T_{f}/3 durant la mise en oeuvre du procédé. On peut ainsi éviter avantageusement que les grains de poudre éclatent ou fusionnent. La valeur Tf de l'oxyde de cérium est d'environ 2400 °C, soit 2673 Kelvin ; la valeur Tf/3 de l'oxyde de cérium est donc d'environ 890 Kelvin, soit environ 620 °C.

Sans vouloir être lié par une quelconque théorie scientifique, on peut penser que le bombardement des ions dans les conditions fait l'effet d'un « nano-percement » à l'échelle nanométrique grâce auquel des nano-trous sont créés par l'impact des ions dans la poudre, notamment dans la structure poreuse de la poudre. Ces nano-trous permettent une meilleure circulation de l'oxygène, aussi bien sur le plan du stockage que sur celui de la libération. Au sens de la présente invention, les nano-trous sont des volumes vides dont la plus grande dimension est supérieure ou égale à 10 nanomètres et la plus petite dimension est supérieure ou égale à un nanomètre. Ces nano-trous ont une profondeur qui est en rapport avec le parcours de l'ion dans la poudre, et un diamètre qui est en rapport avec la masse et l'énergie de l'ion incident. Pour un ion léger, les nano-trous sont en général longs (par exemple quelques centaines de nm) et étroits (par exemple quelques nm voire dizaines de nm), pour des ions plus lourds, les trous sont en général plus courts et plus larges.

Selon différents modes de réalisation qui peuvent être combinés entre eux :
- la dose d'ions par unité de masse est supérieure ou égale à 10¹⁸ ions/g de poudre à traiter et/ou inférieure ou égale à 10²⁰ ions/g de poudre à traiter;
- la poudre est étalée sur une surface avant chaque traitement qui peut être répété une ou plusieurs fois ou encore brassée sous faisceau durant le traitement par un dispositif vibrant (par exemple un bol vibrant ou une plaque vibrant);
- la tension d'accélération des ions est comprise entre 20 kV et 200 kV ;
- les ions sont produits par une source à résonance cyclotronique électronique (RCE) qui a l'avantage d'être compacte et économe en énergie ;
- les grains de la dite poudre présentent un taux de traitement compris entre 1% et 99% ; selon un mode de réalisation ; le taux de traitement de la poudre est supérieur ou égal à 10%, de préférence supérieur à 50%.

Selon un mode de réalisation du procédé le traitement de la poudre pour créer des trous longs et étroits est mis en oeuvre avec des ions légers, choisis parmi les ions des éléments de la liste constituée de l'hélium (He), du bore (B), du carbone (C), de l'azote (N), de l'oxygène (O), du néon (Ne). Le choix d'ions légers peut permettre un mécanisme stockage ou de libération d'oxygène avantageux.

Selon différents modes de réalisation du procédé qui peuvent être combinés entre eux :
- la surface d'étalement de la poudre est calculée pour que l'épaisseur de la poudre soit au moins égale à deux fois le parcours de l'ion dans la dite poudre ;
- la surface d'étalement de la poudre ou un dispositif vibrant (par exemple un bol ou une plaque vibrante) dans lequel se trouve la poudre, sont mobiles par rapport au faisceau d'ions à une vitesse, V_{D}, comprise entre 0,1 mm/s et 1000 mm/s. La vitesse de défilement V_{D}, peut être constante ou variable. Selon un mode de réalisation, la surface d'étalement de la poudre ou le dispositif vibrant, se déplacent et le faisceau d'ions est fixe. Selon un autre mode de réalisation, le faisceau d'ions balaie la surface d'étalement ou le dispositif vibrant ou se trouve la poudre à traiter. Il est également possible que la surface d'étalement ou le dispositif vibrant se déplacent quand le faisceau d'ions est mobile. Selon un mode de réalisation, la surface d'étalement ou le dispositif vibrant se déplacent sous le faisceau d'ions selon une pluralité, N, de passages à la vitesse V_{D}. Il est ainsi possible de traiter la poudre avec une dose totale d'ions correspondant à la somme des doses d'ions reçues par la surface d'étalement ou le dispositif vibrant à l'issue des N passages. On note également que si la puissance surfacique du faisceau permet à la poudre de demeurer durant le traitement à une température acceptable, le traitement peut être statique et résulter d'un ou plusieurs « flash » d'ions; Le nombre et la durée des flashs sont réglés pour atteindre la dose requise, à une température acceptable, après chaque brassage hors faisceau ou pendant brassage sous faisceau avec un dispositif vibrant ;
- la poudre à base d'oxyde de cérium, est choisie parmi la liste constituée d'une poudre de cérine(Ce02), d'une poudre de d'oxydes mixtes de cérium et de zirconium, par exemple de cérine-zircone (Ce_{0.7}Zr_{0.3}O₂) ;

L'invention vise également une poudre à base d'oxyde selon la revendication 8 où les grains de la dite poudre présentent un taux de traitement compris entre 1% et 99%, comprenant des nano-trous.

L'invention porte également sur un dispositif de catalyse hétérogène selon la revendication 9, comprenant une zone de transformation d'un gaz ou d'un liquide comprenant au moins une poudre à base d'oxyde de cérium traitée selon le procédé de la présente invention ou comprenant au moins la poudre selon la revendication 8. Selon un mode de réalisation, le dispositif de catalyse hétérogène comprend un support en nid d'abeille, par exemple en alumine, dont les parois sont revêtues d'une poudre à base d'oxyde de cérium traitée selon le procédé de la présente invention ou d'une poudre comprenant des nano-trous mentionnée ci-dessus.

Selon un mode de réalisation, le dispositif de catalyseur hétérogène est un pot catalytique, visant à limiter la nocivité des gaz d'échappement de véhicules motorisés. On obtient ainsi des promoteurs à base d'oxyde de cérium à réactivité améliorée à basse température associés à des catalyseurs d'oxydation comme le platine (Pt). On peut ainsi envisager de réduire avantageusement la quantité et le cout d'un catalyseur utilisé dans un pot catalytique.

La température d'usage d'une poudre à base d'oxyde de cérium traitée selon le procédé de la présente divulgation ou d'une poudre comprenant des nano-trous mentionnée ci-dessus est supérieure ou égale à 50°C, voire supérieure ou égale à 100°C, lors d'une catalyse hétérogène dans un pot catalytique.

Les substrats utilisant des promoteurs à base d'oxyde de cérium traités selon la présente divulgation peuvent être utilisés dans de nombreux autres domaines techniques, tels que par exemple ceux relatifs aux piles à combustible, au traitement du pétrole ou des produits pétroliers, par exemple pour faciliter l'oxydation de CO lors de la régénération d'un catalyseur dans un procédé de craquage catalytique en lit fluide.

D'autres particularités et avantages de la présente divulgation ressortiront dans la description ci-après d'exemples de réalisation non limitatifs, notamment en référence aux dessins annexés dans lesquels :

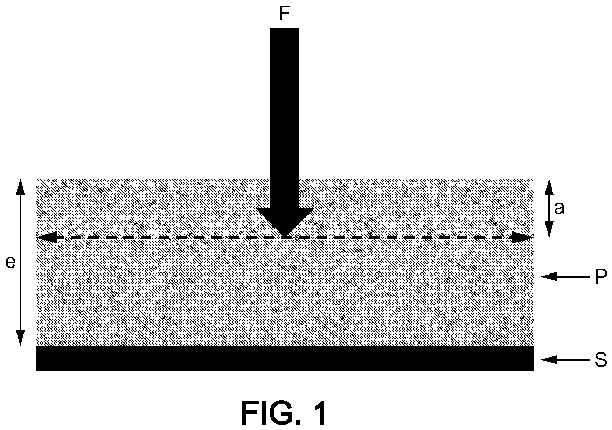

- la figure 1 illustre le traitement par faisceau d'ions d'une poudre (P) étalée sur une surface (S) en précisant les paramètres spécifiques du traitement comme l'épaisseur (e) de la poudre à traiter, le parcours (a) des ions incidents dans la poudre; Un modèle de brassage binomiale de poudre a été construit par les inventeurs en s'appuyant sur cette figure: à chaque brassage un grain de poudre à une probabilité p=(a/e) de se trouver dans la zone exposée au faisceau et une probabilité q = (1-(a/e)) d'être hors de portée du faisceau, avec p+q =1

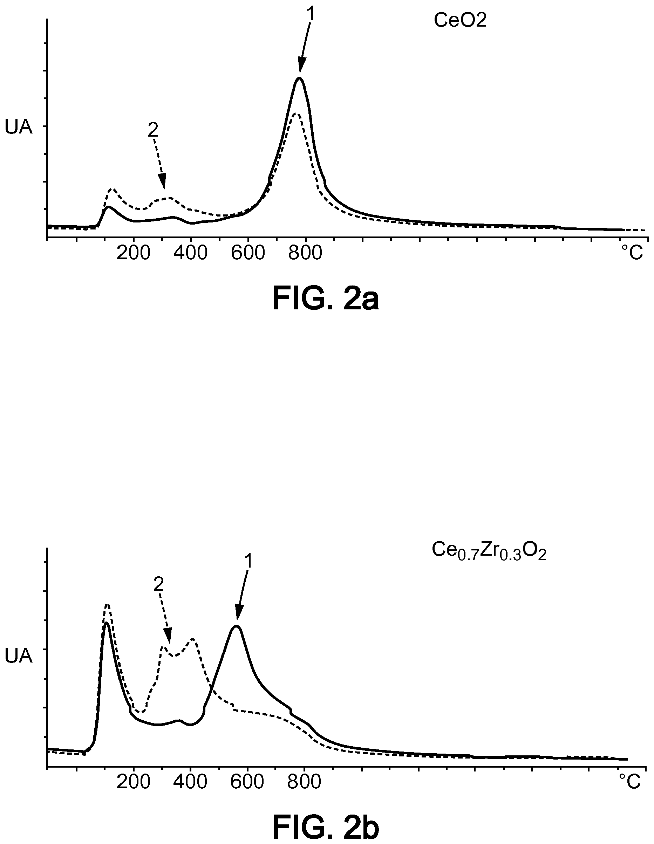

- les figures 2.a à 2.b illustrent les rendements expérimentaux avantageux (exprimés en unité arbitraire (U.A)) obtenus pour transformer l'hydrogène en eau à différentes températures, avec de la cérine (CeO₂) et de la cérine zircone (Ce_{0.7}Zr_{0.3}O₂) traitées selon le procédé de la présent divulgation;

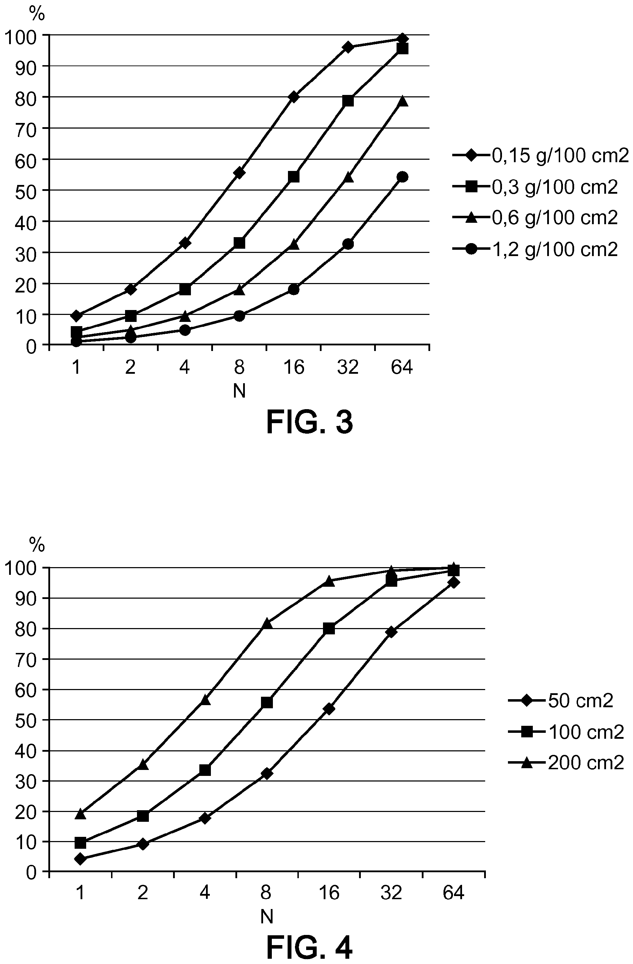

- la figure 3 indique par extrapolation le taux de traitement d'une poudre à base d'oxyde de cérium (en ordonnée exprimé en %) par faisceau d'ions azote d'une énergie moyenne 50 keV, en fonction de la quantité de poudre étalée sur une surface de 100 cm2 et du nombre total de brassages N (en abscisse), chacun étant effectué avant chaque traitement par faisceau d'ions. Cette extrapolation s'appuie sur le modèle de traitement de poudre exposée dans la figure 1. Les inventeurs estiment qu'un taux minimum de traitement égal à 10% est souhaitable sur une poudre, et qu'il préférable que ce taux soit supérieur à 50%.
- la figure 4 indique par extrapolation le taux de traitement d'une poudre d'oxyde de cérium (en ordonnée exprimé en %) par faisceau ions d'azote avec une énergie moyenne de 50 keV, pour une quantité de poudre fixée à 0,15 mg, étalée sur 3 surfaces d'aires respectives égales à 50, 100 et 200 cm2, en fonction du nombre total de brassages N (en abscisse), chacun étant effectué avant chaque traitement par le faisceau d'ions. Cette extrapolation s'appuie sur le modèle de traitement de poudre exposée dans la figure 1. Les inventeurs estiment qu'un taux minimum de traitement égal à 10% est souhaitable sur une poudre, qu'il est préférable que ce taux soit supérieur à 50%.

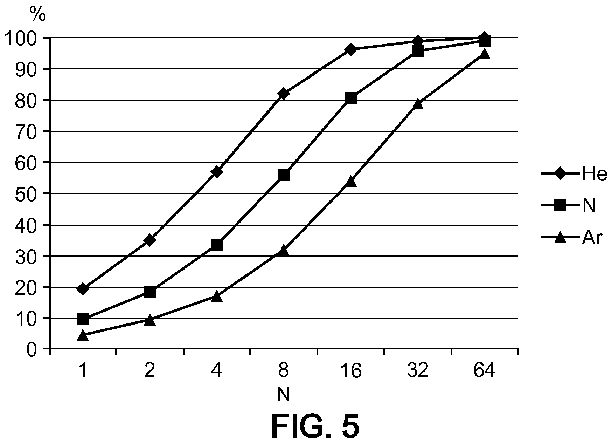

- la figure 5 indique par extrapolation le taux de traitement d'une poudre d'oxyde de cérium (en ordonnée exprimé en %), en fonction de plusieurs types d'ions (du plus léger He, au plus lourd Ar), d'une énergie de 50 keV, pour une quantité de poudre fixée à 0,15 mg étalée sur une surface fixée à 100 cm2, en fonction du nombre total de brassages N (en abscisse), chacun étant effectué avant chaque traitement par faisceau ionique. Cette extrapolation s'appuie sur le modèle de traitement de poudre exposée dans la figure 1. Les inventeurs estiment qu'un taux minimum de traitement égal à 10% est souhaitable sur une poudre, qu'il est préférable que ce taux soit supérieur à 50%.

Pour des raisons de clarté, les dimensions des différents éléments représentés sur ces figures ne sont pas nécessairement en proportion avec leurs dimensions réelles. Les mêmes références numériques sur les différentes figures correspondent aux mêmes parties.

Selon des exemples de mise en oeuvre de la présente invention des échantillons, des poudres de cérine(CeO₂) ainsi que de cérine zirconium (Ce_{0.7}Zr_{0.3}O₂) ont été brassées et étalées avant chaque traitement sur une surface en aluminium et ont fait l'objet d'études expérimentales pour un traitement avec des ions d'azote émis par une source RCE. Le traitement consistait à répéter 16 fois la même procédure comprenant les étapes suivantes: premièrement brassage et étalement uniforme de 150 mg de poudre sur une surface carrée de 100 cm² avec un pinceau fin, deuxièmement traitement de la poudre étalée avec un faisceau de 40 mm de diamètre, se déplaçant à une vitesse de 80 mm/s, avec une amplitude de déplacement de 60x40cm, en 11 passes (correspondant à un pas d'avancement du faisceau de 30%) pour atteindre une dose d'ions par unité de surface égale à 5x10¹⁵ ions/cm2 à la fin de chaque traitement; Après avoir répété 16 fois la procédure, la dose de traitement totale cumulée par les 150 mg de poudre étalée sur 100 cm2 est égale à 16x5x10¹⁵x100 soit 8x10¹⁸ ions, ce qui revient à une dose totale de traitement par unité de masse de poudre égale à 5x10¹⁹ ions/gramme de poudre. Les inventeurs estiment que la plage de dose pour avoir un traitement particulièrement efficace doit être de préférence comprise entre 10¹⁸ ions/gramme et 10²⁰ ions/gramme de poudre. Le taux de traitement a été évalué à 80%, pour un parcours de l'ion azote à 50 keV dans une poudre de cérine ou cérine zircone, évalué à 0,2 microns et une épaisseur de poudre de cérine ou cérine zircone étalée sur 100 cm², évaluée à 2 microns, soit 10 fois le parcours de l'ion.

Le faisceau d'ions qui a été utilisé pour traiter les poudres précédentes, comprend des ions N⁺ dont l'intensité est sensiblement égale à 0,58 mA, des ions N²⁺ dont l'intensité est sensiblement égale à 0,32 mA, enfin des ions N³⁺ dont l'intensité est sensiblement égale à 0,1 mA; la tension d'extraction et d'accélération de ces ions est de 35 kV ; l'énergie de N⁺ est de 35 keV, celle de N²⁺ de 70 keV, celle de N³⁺ de 105 keV. On estime que l'énergie moyenne de ces ions est d'environ 50 keV.

Une étude expérimentale pour évaluer l'impact du traitement sur la transformation d'hydrogène en eau en fonction de la température, a ensuite été menée sur des poudres de cérine et de cérine zircone vierges et traitées. Cette étude a consisté à injecter dans une cellule un flux de 5 % d'hydrogène (H₂) dans un flux d'argon (Ar), à raison de 25 cm³ min⁻¹ en faisant varier la température entre 30 et 800°C selon une montée graduelle de la température de 7,5°C/min. Le taux de formation d'eau a été mesuré en fonction de la température en surface ou dans la masse de la poudre vierge et traité.

De tels essais sont représentatifs des réactions rencontrées dans le pots catalytiques à trois voies, où des composés-tampons d'oxyde de cérium sont ajoutés à de l'alumine d'un support pour limiter l'impact des variations de composition des gaz en stockant de l'oxygène quand il est en excès pour le rejeter quand il en manque.

Pour valider l'impact du traitement par bombardement ionique des poudres d'oxyde de cérium pour pots catalytiques à trois voies, les inventeurs ont donc étudié la réaction d'oxydation de l'hydrogène sous forme d'eau en présence d'oxyde de cérium avec ou sans apport de platine. La réaction de l'oxydation de l'hydrogène sous forme d'eau est en effet très proche et représentative sur le plan des réactions chimiques, des deux types de réactions d'oxydation survenant dans le pot catalytique à trois voies à savoir celle du monoxyde de carbone en dioxyde de carbone et de celle des gaz imbrulés avec formation d'eau. Les tableaux 1 et 2 et figures associées illustrent les améliorations constatées par les inventeurs et basées sur cette réaction d'oxydation de l'hydrogène obtenues avec des poudres d'oxyde de cérium traitées selon le procédé de l'invention. Ces améliorations constatées peuvent être aisément transposées, en termes d'efficacité, aux réactions d'oxydation survenant dans le pot catalytique à trois voies.

Le tableau 1 consigne résultats expérimentaux obtenus pour la température de réduction en surface et dans la masse pour une cérine vierge et traitée, le tableau 2 ceux obtenus pour une cérine zircone vierge et traitée.

**Tableau 1**

| **Echantillon CeO₂** | **Doses estimées (10¹⁷ ions/g de poudre)** | **Température de réduction en surface (°C)** | **Température de réduction dans la masse (°C)** |
|---|---|---|---|
| vierge | 0 | 340 | 780 |
| 10 | 5 | 280 | 770 |

**Tableau 2**

| **Echantillon Ce_{0.7}Zr_{0.3}O₂** | **Doses estimées (10¹⁷ ions/g de poudre)** | **Température de réduction en surface (°C)** | **Température de réduction dans la masse (°C)** |
|---|---|---|---|
| vierge | 0 | 358 | 561 |
| 10 | 5 | 270, 305, 370 | 408 |

On constate dans le tableau 1 que pour la cérine traitée, la température de réduction en surface est très avantageusement diminuée, passant de 340 à 280°C soit une diminution de 60°C ; la température dans la masse l'est beaucoup moins, passant seulement de 780°C à 770°C.

On constate dans le tableau 2 que pour la cérine zircone traitée, la température de réduction en surface est très avantageusement diminuée en surface, passant de 358 à 270°, soit une diminution de 88°C ; elle l'est beaucoup plus dans la masse passant de 561°C à 408°C, soit une diminution de 153°C.

La figure 2.a et 2.b donnent le détail de ces résultats respectivement pour la poudre de cérine et la poudre de cérine zircone. L'axe des abscisses représente l'axe des températures sur lequel on se déplace à raison de 7,5°C/min, l'axe des ordonnées représente le taux de production d'eau (exprimée en unité arbitraire). On constate que dans la figure 2.a, la courbe (2) associée à la poudre de cérine traitée selon le procédé de l'invention, se détache très favorablement de la courbe (1) associée à la poudre de cérine vierge dans la zone de température comprise entre 100° et 500°C, le taux de production d'eau y est deux fois plus élevé. De même, dans la figure 2.b, la courbe (2) associée à la poudre de cérine zircone traitée selon le procédé de l'invention, se distingue par un taux de production d'eau massif et élevé dans une plage de température inférieure d'environ 200°C par rapport à celui de la courbe (1) associé à la poudre de cérine zircone vierge.

Les inventeurs ont ainsi pu identifier expérimentalement, un point de fonctionnement particulièrement avantageux du procédé de l'invention appliqué aux poudres à base d'oxyde de cérium, pour une dose totale par unité de masse de poudre à traiter (5x10¹⁹ ions/g de poudre) et un taux de traitement (80%). Les inventeurs préconisent d'élargir ce point de fonctionnement de préférence à une plage de dose totale en nombre d'ions par unité de masse de poudre à traiter comprise 10¹⁸ et 10²⁰ ions/g et à une plage en taux de traitement supérieure à 10%, de préférence supérieure à 50%.

La dose totale par unité de masse de poudre à traiter étant fixée à l'intérieur de la plage préconisée ci-dessous, les inventeurs ont cherché, sur la base d'un modèle empirique simple exposé à la figure 1, à comprendre et à estimer le taux de traitement d'une poudre en fonction des conditions mises en oeuvre par le procédé de l'invention comme la quantité de poudre, sa surface d'étalement ou encore le type et l'énergie de l'ion du faisceau. La figure 1 illustre le traitement d'une poudre (P) étalée sur un substrat (S) selon une épaisseur constante (e), traversée partiellement par un faisceau d'ions (F) dont la portée dans la poudre délimite une zone de parcours d'une profondeur maximale (a) . En deçà de cette zone, les grains de poudres sont hors d'atteinte du faisceau. Ce modèle de traitement, fait l'hypothèse qu'à chaque brassage et avant chaque traitement, un grain de poudre peut se situer dans la zone de parcours des ions incidents ou hors de cette même zone. Une augmentation de la zone de parcours de l'ion incident, une augmentation du nombre de brassage, une réduction de l'épaisseur de poudre à traiter obtenue par une réduction de la quantité de poudre ou par une augmentation de la surface d'étalement, sont autant de facteurs qui favorisent la probabilité pour qu'un grain de poudre soit exposé au moins une fois au faisceau. Les inventeurs ont pu quantifier l'impact de ces facteurs sur le taux de traitement, les tendances associées sont illustrées dans les figures 3, 4 et 5.

La figure 3 représente l'impact de l'étalement d'une quantité de poudre à base d'oxyde de cérium donnée sur le taux de traitement de la poudre. Le faisceau est constitué d'ions azote d'une énergie moyenne d'environ 50 keV, parcourant une distance moyenne de 0,2 microns dans la poudre. Pour un étalement de 0,15 mg de poudre d'oxyde de cérium étalée sur 100 cm² et traitée selon 16 brassages, le taux de traitement des grains de poudre est d'environs 80% (conditions de traitement des poudres étudiées expérimentalement). On constate que pour augmenter de 15% l'efficacité du brassage passant d'un taux de traitement de 80% à 95%, on peut multiplier par 2 le nombre de brassage, autrement on peut prévoir un système de brassage plus puissant. Pour atteindre un taux de traitement minimal de 10%, on peut multiplier par 2 le nombre de brassage lorsqu'on multiplie par 2 la quantité de poudre à traiter.

La figure 4 représente l'impact de l'étalement d'une quantité de poudre à base d'oxyde de cérium donnée sur le taux de traitement de la poudre. Le faisceau est constitué d'ions azote d'une énergie moyenne d'environ 50 keV, parcourant une distance moyenne de 0,2 microns dans la poudre.

Dans les conditions expérimentales exprimées ci-dessus, 0,15 mg de poudre étalée et traitée sur 100 cm² possède une épaisseur d'environs 2 microns. La portée des ions est d'environ 0,2 micron. Pour 16 brassages, les inventeurs ont estimé que la poudre avait été traitée avec un taux de 80%. Afin d'augmenter d'un facteur 2 la quantité de poudre à traiter, on est peut augmenter d'un facteur 2 le nombre de brassages pour obtenir un taux de traitement identique.

Pour évaluer expérimentalement l'impact de la surface sur le traitement de 150 mg de poudres d'alumine avec une dose totale 8x10¹⁷ ions azote soit 5x10¹⁹ ions/g de poudre d'alumine, selon différentes surfaces d'étalement égales à 1200 cm², 100 cm², 100 cm² associées à un nombre de brassages respectifs égal à 2, 2 et 16, les inventeurs ont procédé à une analyse par spectroscopie de photoélectrons X (XPS pour « *X-ray photo electron spectroscopy* » également nommé ESCA pour « *electron spectroscopy for chemical analysis* ») de la poudre. Ils ont pu constater que le spectre de la poudre n'avait quasiment pas changé dans les deux premiers cas, comme si les grains de poudres n'avaient pas été exposés de manière significative au faisceau, à la différence du troisième cas pour lequel les charges électrostatiques déposées par le faisceau sur les poudres rendaient impossible l'analyse XPS. Les inventeurs ont conclus, que dans le premier cas l'épaisseur de poudres estimée en moyenne à 0,3 micron, pouvant être très inférieure à 0,1 micron par endroit, apparaissait trop faible pour être traitée efficacement par un faisceau dont le parcours dans la poudre est d'environ 0,3 à 0,4 microns. Les inventeurs préconisent, de préférence, d'étaler une quantité de poudre donnée sur une surface calculée pour que l'épaisseur (e) soit au moins égale à deux fois le parcours moyen de l'ion dans ladite poudre. Dans l'exemple du deuxième cas le nombre de brassage n'était pas suffisant ; ils ont évalué un taux de traitement d'environ 10% (en s'appuyant sur le modèle de la figure 1 appliqué aux poudres d'alumine), pour obtenir une signature significative par l'analyse XPS. Les inventeurs préconisent sur cette base, de préférence, un nombre de brassage minimal permettant d'atteindre un taux minimal de traitement au moins égal à 10%. Dans le troisième cas, les inventeurs ont constaté que les grains de poudres ont été majoritairement exposés au faisceau dans la mesure où ceux-ci conservent une charge électrique persistante, qui rend l'analyse XPS impossible. Les inventeurs ont évalué le taux de traitement à 60%, six fois supérieur à celui du deuxième cas estimé à 10%. Les inventeurs préconisent sur cette base, de préférence, un nombre de brassages minimal permettant d'atteindre de préférence un taux de traitement des grains de poudres au moins égal à 50%.

La figure 4 illustre l'impact du choix du type d'ions sur le taux de traitement, pour 150 mg de poudre à base d'oxyde de cérium étalé sur 100 cm². Pour un taux de traitement quelconque, on constate que pour un même nombre brassage identique, l'hélium permet un taux de traitement de 60% fois supérieur à celui de l'azote, lequel à un taux de traitement 60% supérieur à celui de l'argon. Les inventeurs préconisent sur cette base, de préférence, d'utiliser en priorité des ions légers comme l'hélium (He), du bore (B), du carbone (C), de l'azote (N), de l'oxygène (0), du néon (Ne) .

On rappelle que le calcul de taux de traitement d'une poudre fondé sur le parcours d'un ion dans un oxyde métallique donné, un ion incident donné, d'énergie donnée se fonde sur les principes de la physique des interactions des particules avec la matière. Des méthodes et données permettant de faire ces calculs sont notamment divulguées dans les publications « The Stopping and Range of Ions in Matter » by J.F. Ziegler, volumes 2-6, Pergamon Press, 1977-1985, « The Stopping and Range of Ions in Solids » by J.F. Ziegler, J.P. Biersack and U. Littmark, Pergamon Press, New York, 1985 (new édition in 2009) et J.P. Biersack and L. Haggmark, Nucl. Instr. and Meth., vol. 174, 257, 1980.

En outre, des logiciels ont été développés et commercialisés afin de faciliter ou d'effectuer de tels calculs, comme par exemple les logiciels commercialisés sous les noms « SRIM » (« *The Stopping and Range of Ions in Matter* ») et « TRIM » (« *The Transport of Ions in Matter* »), développés notamment par James F. Ziegler.

Il va de soi qu'il est possible de combiner les calculs et résultats exposés de manière à déterminer le nombre de brassages désiré sur surface d'étalement donnée, pour procéder au traitement d'une quantité de poudre à taux de traitement souhaité pour les combinaisons possibles, notamment de type de poudre d'oxyde métallique, de type d'ion pour le traitement, de l'énergie de ces ions.

Il est ainsi possible de procéder au choix de la dose d'ions par gramme de poudre à traiter et au nombre de brassages à effectuer sur une surface d'étalement de manière à traiter celle-ci de manière prédictive.

Il convient de noter que des observations expérimentales sur des échantillons ayant fait l'objet d'un traitement par un faisceau d'ion peuvent permettre de confirmer ou d'ajuster la plage de dose d'ions et le nombre de brassage sélectionnés. De telles observations peuvent notamment être effectuées par XPS pour affiner le brassage, ou par mesure de la température de réduction de la poudre traitée pour optimiser de la dose requise.

Pour extrapoler les résultats précédents, à un système de brassage vibrant (bol, plaque...) sous faisceau, les inventeurs préconisent par exemple de caractériser celui-ci en déposant une couche de poudre à base d'oxyde de cérium colorée en blanc sur une couche de poudre à base d'oxyde de cérium colorée en noir et d'observer en fonction du temps de vibration le mélange statistique des grains blancs et noirs à la surface de la poudre en fonction du temps dans le but d'établir un lien entre le nombre de brassages et le temps de vibration du dispositif. A l'instant t0 = 0, 100% des grains de poudre en surface sont blancs. Lorsqu'à un instant caractéristique t1, 25% des grains sont blancs et 75% des grains sont noirs, les inventeurs estiment que 50% des grains de poudres noirs et blancs confondus ont été exposés au moins une fois au faisceau. On peut ainsi établir une correspondance entre le système de brassage avec dispositif vibrant et le système de brassage décrit plus haut, pour lequel on est capable de déterminer avec le modèle statistique binomial de la figure 1, le nombre de brassage nécessaire pour traiter avec un taux de traitement donné, une poudre dont la quantité est égale à quantité de poudre blanche et de poudre noire, l'épaisseur est égale à la somme des épaisseurs de poudre blanche et de poudre noire, la surface d'étalement est égale à celle de la poudre blanche, qui est elle-même égale à celle de la poudre noire. Il est ainsi aisé de relier proportionnellement un nombre de brassage à une durée de vibration du dispositif, d'extrapoler ces résultats pour connaitre par exemple le temps de vibration du dispositif pour avoir un taux de traitement des grains de poudres égal à 80%.

Les méthodologies présentées dans les exemples ci-dessus permettent à un homme du métier de trouver aisément les moyens de mettre en oeuvre le procédé de la présente invention, par le biais d'essais préalables simples de nature à préciser les conditions de traitement favorables dans le respect des plages indiquées.

Il convient de noter que si des exemples de mise en oeuvre avec des poudres à base d'oxyde de cérium ont été présentés, le procédé peut être mis en oeuvre avec de très nombreux systèmes de brassage et de très nombreuses poudres d'oxyde métallique comprenant du cérium en vue d'obtenir une augmentation de la porosité permettant un meilleur stockage et une meilleure libération d'oxygène à l'échelle nanoscopique.

## Revendications

1. Procédé de traitement par un faisceau d'ions (F) d'une poudre à base d'oxyde de cérium (P) **caractérisé en ce que**:
- la poudre est brassée une ou plusieurs fois durant le traitement;
- les ions du faisceau d'ions sont sélectionnés parmi les ions des éléments de la liste constituée de l'hélium (He), du bore (B), du carbone (C), de l'azote (N), de l'oxygène (0), du néon (Ne), de l'argon (Ar), du krypton (Kr), du xénon (Xe) ;
- la tension d'accélération des ions est supérieure ou égale à 10 kV et inférieure ou égale à 1000 kV ;
- la température de la poudre (P) est inférieure ou égale à T_{f/}3, où T_{f} est la température de fusion de ladite poudre (P) ;
- on choisit la dose totale d'ions cumulée à la fin du traitement par unité de masse de poudre à traiter dans une plage comprise entre 10¹⁶ ions/gramme de poudre et 10²² ions/gramme de poudre (P) pour diminuer la température de réduction de la poudre à base d'oxyde de cérium.

2. Procédé selon la revendication précédente **caractérisé en ce que** la dose d'ions par unité de masse de poudre à traiter est comprise entre 10¹⁸ ions/gramme de poudre et 10²⁰ ions/gramme de poudre.

3. Procédé selon l'une quelconque des revendications précédentes **caractérisé en ce que** la tension d'accélération des ions est comprise entre 20 kV et 200 kV.

4. Procédé selon l'une quelconque des revendications précédentes **caractérisé en ce que** le traitement de poudre (P) est mis en oeuvre avec des ions légers, choisis parmi les ions des éléments de la liste constituée de l'hélium (He), du bore (B), du carbone (C), de l'azote (N), de l'oxygène (O), du néon (Ne).

5. Procédé selon l'une quelconque des revendications précédentes **caractérisé en ce que** la surface d'étalement de la poudre est calculée pour que l'épaisseur de la poudre soit au moins égale à deux fois le parcours de l'ion dans la dite poudre.

6. Procédé selon l'une quelconque des revendications précédentes **caractérisé en ce que** la surface d'étalement (S) de la poudre (P) ou un dispositif vibrant contenant la poudre sont mobiles par rapport au faisceau d'ions (F) à une vitesse, V_{D}, comprise entre 0,1 mm/s et 1000 mm/s selon une pluralité, N, de passages à la vitesse V_{D}.

7. Procédé selon l'une quelconque des revendications précédentes **caractérisé en ce que** la poudre à base d'oxyde de cérium (P) est choisie parmi la liste constituée d'une poudre de cérine (CeO₂), d'une poudre de d'oxydes mixtes de cérium et de zirconium, par exemple d'une poudre de cérine-zircone (Ce_{0.7}Zr_{0.3}O₂).

8. Poudre à base d'oxyde de cérium (P), obtenue selon le procédé d'une quelconque des revendications précédentes, où les grains de la dite poudre présentent un taux de traitement compris entre 1% et 99% et comprennent des nano-trous.

9. Dispositif de catalyse hétérogène comprenant une zone de transformation d'un gaz ou d'un liquide **caractérisé en ce que** la zone de transformation d'un gaz ou d'un liquide comprend une poudre à base d'oxyde de cérium (P) obtenue selon le procédé de traitement par un faisceau d'ions d'une poudre à base d'oxyde de cérium de l'une quelconque des revendication 1 à 7 ou une poudre selon la revendication 8.

10. Dispositif de catalyse hétérogène selon la revendication précédente où le dispositif de catalyseur hétérogène est un pot catalytique.

## Patentansprüche

1. Verfahren zur Behandlung eines Pulvers aus Ceroxid (P) durch einen Ionenstrahl (F), **dadurch gekennzeichnet, dass**:
- das Pulver während der Behandlung einmal oder mehrmals durchmischt wird;
- die Ionen des Ionenstrahls aus den Ionen der Elemente der Liste, bestehend aus Helium (He), Bor (B), Kohlenstoff (C), Stickstoff (N), Sauerstoff (0), Neon (Ne), Argon (Ar), Krypton (Kr), Xenon (Xe), ausgewählt sind;
- die Beschleunigungsspannung der Ionen größer als oder so groß wie 10 kV und kleiner als oder so groß wie 1.000 kV ist;
- die Temperatur des Pulvers (P) kleiner als oder so groß wie T_{f}/3 ist, wobei T_{f} die Schmelztemperatur des Pulvers (P) ist;
- die gesamte kumulierte Ionendosis am Behandlungsende pro Masseneinheit an zu behandelndem Pulver aus einem Bereich von 10¹⁶ Ionen/Gramm Pulver bis 10²² Ionen/Gramm Pulver (P) ausgewählt wird, um die Reduktionstemperatur des Pulvers aus Ceroxid zu senken.

2. Verfahren nach dem vorangehenden Anspruch **dadurch gekennzeichnet, dass** die Ionendosis pro Masseneinheit an zu behandelndem Pulver 10¹⁸ Ionen/Gramm Pulver bis 10²⁰ Ionen/Gramm Pulver beträgt.

3. Verfahren nach einem der vorangehenden Ansprüche, **dadurch gekennzeichnet, dass** die Beschleunigungsspannung der Ionen 20 kV bis 200 kV beträgt.

4. Verfahren nach einem der vorangehenden Ansprüche, **dadurch gekennzeichnet, dass** die Behandlung des Pulvers (P) mit leichten Ionen erfolgt, die aus den Ionen der Elemente der Liste, bestehend aus Helium (He), Bor (B), Kohlenstoff (C), Stickstoff (N), Sauerstoff (0) und Neon (Ne), ausgewählt sind.

5. Verfahren nach einem der vorangehenden Ansprüche, **dadurch gekennzeichnet, dass** die Ausbreitungsfläche des Pulvers so berechnet wird, dass die Dicke des Pulvers zumindest gleich dem Doppelten des Wegs des Ions im Pulver ist.

6. Verfahren nach einem der vorangehenden Ansprüche, **dadurch gekennzeichnet, dass** die Ausbreitungsfläche (S) des Pulvers (P) oder eine das Pulver enthaltende Vibrationsvorrichtung in Bezug auf den Ionenstrahl (F) mit einer Geschwindigkeit V_{D} von 0,1 mm/s bis 1.000 mm/s entlang einer Mehrzahl N von Übergängen mit der Geschwindigkeit V_{D} bewegbar ist.

7. Verfahren nach einem der vorangehenden Ansprüche, **dadurch gekennzeichnet, dass** das Pulver aus Ceroxid (P) aus der Liste, bestehend aus einem Cer-Pulver (CeO₂), einem Pulver aus gemischten Cer- und Zirkoniumoxiden, beispielsweise einem Pulver Cer-Zirkonium-Pulver (Ce_{0.7}Zr_{0.3}O₂), ausgewählt ist.

8. Pulver aus Ceroxid (P), das mit einem Verfahren nach einem der vorangehenden Ansprüche erhalten wird, wobei die Körner des Pulvers eine Behandlungsrate von 1 % bis 99 % aufweisen und Nanolöcher umfassen.

9. Vorrichtung zur heterogenen Katalyse, umfassend einen Bereich zur Umwandlung eines Gases oder einer Flüssigkeit, **dadurch gekennzeichnet, dass** der Bereich zur Umwandlung eines Gases oder einer Flüssigkeit ein Pulver aus Ceroxid (P) umfasst, das mit einem Verfahren zur Behandlung eines Pulvers aus Ceroxid durch einen Ionenstrahl nach einem der Ansprüche 1 bis 7 oder einem Pulver nach Anspruch 8 erhalten wird.

10. Vorrichtung zur heterogenen Katalyse nach dem vorangehenden Anspruch, wobei die Vorrichtung zur heterogenen Katalyse ein Katalysator ist.

## Claims

1. A process for the treatment by an ion beam (F) of a powder based on cerium oxide (P), **characterized in that**:
- the powder is mixed one or more times during the treatment;
- the ions of the ion beam are selected from the ions of the elements of the list consisting of helium (He), boron (B), carbon (C), nitrogen (N), oxygen (0), neon (Ne), argon (Ar), krypton (Kr) and xenon (Xe);
- the acceleration voltage of the ions is greater than or equal to 10 kV and less than or equal to 1000 kV;
- the temperature of the powder (P) is less than or equal to Tₘ/3, where Tₘ is the melting point of said powder (P);
- the cumulative total dose of ions at the end of the treatment per unit of weight of powder to be treated is chosen within a range of between 10¹⁶ ions/gram of powder and 10²² ions/gram of powder (P) in order to reduce the temperature for reduction of the powder based on cerium oxide.

2. The process as claimed in the preceding claim, **characterized in that** the dose of ions per unit of weight of powder to be treated is between 10¹⁸ ions/gram of powder and 10²⁰ ions/gram of powder.

3. The process as claimed in any one of the preceding claims, **characterized in that** the acceleration voltage of the ions is between 20 kV and 200 kV.

4. The process as claimed in any one of the preceding claims, **characterized in that** the treatment of powder (P) is implemented with light ions chosen from the ions of the elements of the list consisting of helium (He), boron (B), carbon (C), nitrogen (N), oxygen (0) and neon (Ne).

5. The process as claimed in any one of the preceding claims, **characterized in that** the spreading surface area of the powder is calculated in order for the thickness of the powder to be at least equal to twice the distance covered by the ion in said powder.

6. The process as claimed in any one of the preceding claims, **characterized in that** the spreading surface (S) of the powder (P) or a vibrating device containing the powder are movable with respect to the ion beam (F) at a rate, R_{FP}, of between 0.1 mm/s and 1000 mm/s according to a plurality, N, of passes at the rate R_{FP}.

7. The process as claimed in any one of the preceding claims, **characterized in that** the powder based on cerium oxide (P) is chosen from the list consisting of a ceria (CeO₂) powder and a mixed cerium and zirconium oxide powder, for example a ceria-zirconia (Ce_{0.7}Zr_{0.3}O₂) powder.

8. A powder based on cerium oxide (P) obtained according to the process of any one of the preceding claims, where the grains of said powder exhibit a degree of treatment of between 1% and 99% and comprise nanoholes.

9. A heterogeneous catalysis device comprising a region of transformation of a gas or of a liquid, **characterized in that** the region of transformation of a gas or of a liquid comprises a powder based on cerium oxide (P) obtained according to the process of treatment by an ion beam of a powder based on cerium oxide of any one of claims 1 to 7 or a powder as claimed in claim 8.

10. The heterogeneous catalysis device as claimed in the preceding claim, where the heterogeneous catalysis device is a catalytic converter.
